# EUROPEAN PATENT APPLICATION

(11) **EP 4 082 774 A1**
(43) Date of publication of application: **02.11.2022**
(21) Application number: 21757275.9
(22) Date of filing: 16.02.2021
(51) Int. Cl.: B32B 25/00, B60C 1/00, C08L 9/06, C08L 21/00, C08L 101/00, B60C 11/00

(54) **TIRE**

(30) Priority: 19.02.2020 JP 2020026357
(71) Applicant: Sumitomo Rubber Industries, Ltd., Kobe-shi, Hyogo 651-0072 (JP)
(72) Inventor: SUZUKI, Yumi, Kobe-shi, Hyogo 651-0072 (JP)
(74) Representative: Manitz Finsterwald Patent- und Rechtsanwaltspartnerschaft mbB
(86) International application number: PCT/JP2021/005697
(87) International publication number: WO 2021/166904

(57) **Abstract**

A tire comprising a tread that comprises a first layer constituting a tread surface, and a second layer adjacent to the inner side of the first layer in a radial direction, wherein each of the first layer and the second layer is constituted by a rubber composition comprising a rubber component and a thermoplastic elastomer.

## Description

### TECHNICAL FIELD

The present invention relates to a tire having improved grip performance and durability with good balance.

### BACKGROUND ART

An art for improving grip performance by comprising a thermoplastic elastomer into a tread rubber is known.

### PRIOR ART DOCUMENT

### Patent Document

Patent Document 1: JP 2016-210937 A

### SUMMARY OF THE INVENTION

### PROBLEM TO BE SOLVED BY THE INVENTION

A thermoplastic elastomer is soft at a normal temperature, as compared with resin, and when the thermoplastic elastomer is added to a rubber, an increase in hardness of a rubber composition is suppressed and an intermolecular force between hard segments is weakened when heat is applied. As a result, energy loss can be caused, so that it is considered that grip performance at an initial stage of running is improved.

On the other hand, taking into consideration a vulcanized adhesiveness to another tire member constituted by a rubber composition not comprising a thermoplastic elastomer, thermoplastic elastomers concentrate on an adhesive interface due to heat during vulcanization and a concentration gradient, and adhesiveness between rubber members are deteriorated, and thus deterioration of durability is concerned.

It is an object of the present invention to provide a tire having improved grip performance and durability with good balance.

### MEANS TO SOLVE THE PROBLEM

As a result of intensive studies, the present inventor has found that, in a case where a thermoplastic elastomer is compounded in a first rubber layer constituting a tread surface (typically, a cap tread), by interposing, between the first layer and a belt layer, a rubber layer in which a thermoplastic elastomer is compounded under a predetermined condition, a tire can be obtained which has improved grip performance and durability with good balance, and completed the present invention.

That is the present invention relates to
[1] A tire comprising a tread,
   the tread comprising
      a first layer constituting a tread surface, and
      a second layer adjacent to the inner side of the first layer in a radial direction,
   wherein each of the first layer and the second layer is constituted by a rubber composition comprising a rubber component and a thermoplastic elastomer,
[2] The tire of [1] above, wherein the rubber composition of the first layer comprises 5 to 50 parts by mass of a thermoplastic elastomer based on 100 parts by mass of a rubber component of the first layer,
[3] The tire of [1] or [2] above, wherein the rubber composition of the second layer comprises 3 to 30 parts by mass of a thermoplastic elastomer based on 100 parts by mass of a rubber component of the second layer,
[4] The tire of any one of [1] to [3] above, wherein a value of a part by mass of the thermoplastic elastomer based on 100 parts by mass of the rubber component of the first layer is greater than a value of a part by mass of the thermoplastic elastomer based on 100 parts by mass of the rubber component of the second layer,
[5] The tire of any one of [1] to [4] above, wherein each of the rubber components of the first layer and the second layer comprise a styrene-butadiene rubber,
[6] The tire of any one of [1] to [5] above, wherein the thermoplastic elastomer has a styrene block at a polymer terminal,
[7] The tire of any one of [1] to [6] above, further comprising one or more rubber layers arranged between the second layer and a belt layer,
[8] The tire of any one of [1] to [7] above, further comprising a third layer that is arranged between the second layer and a belt layer, the third layer being constituted by a rubber composition comprising a rubber component and sulfur,
   wherein a value of a part by mass of sulfur based on 100 parts by mass of the rubber component of the third layer is greater than a value of a part by mass of sulfur based on 100 parts by mass of the rubber component of the second layer,
[9] The tire of any one of [1] to [8] above, wherein at least one of the rubber composition of the first layer and the rubber composition of the second layer comprises a thiuram-based vulcanization accelerator,
[10] The tire of any one of [1] to [9] above, wherein a product of a content of the thermoplastic elastomer based on 100 parts by mass of the rubber component of the first layer (parts by mass) and a thickness of the first layer t1 (mm) is 120 or more, and
[11] The tire of any one of [1] to [10] above, wherein a product of a content of the thermoplastic elastomer based on 100 parts by mass of the rubber component of the second layer (parts by mass) and a thickness of the second layer t2 (mm) is 6 or more.

### EFFECTS OF THE INVENTION

According to the present invention, in the case where a thermoplastic elastomer is compounded in a first rubber layer constituting a tread surface (typically, a cap tread), by interposing, between the first layer and a belt layer, a rubber layer in which a thermoplastic elastomer is compounded under a predetermined condition, a tire is provided which has improved grip performance and durability with good balance.

### BRIEF DESCRIPTION OF THE DRAWINGS

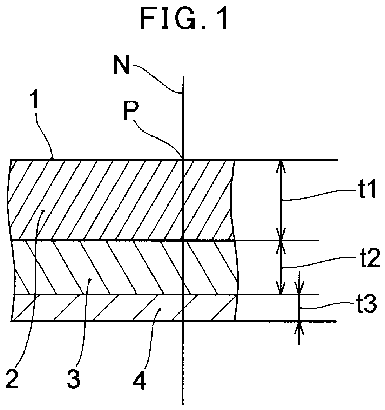

FIG. 1 is an enlarged cross-sectional view showing a portion of a tread of a tire according to one embodiment of the present disclosure.

### EMBODIMENT FOR CARRYING OUT THE INVENTION

A tire that is one embodiment of the present disclosure comprises a tread comprising a first layer constituting a tread surface and a second layer adjacent to the inner side of the first layer in a radial direction, and the first layer and the second layer are constituted by rubber compositions comprising rubber components and thermoplastic elastomers. Moreover, a content of the thermoplastic elastomer based on 100 parts by mass of the rubber component of the first layer is preferably higher than a content of the thermoplastic elastomer based on 100 parts by mass of the rubber component of the second layer.

It is considered that grip performance and durability of the tire of the present disclosure are improved with good balance by the following mechanism, although it is not intended to be bound by any theory. By interposing, between a tread surface layer and a belt layer, a rubber layer comprising a thermoplastic elastomer, adhesiveness by vulcanization bonding and an intermolecular force between the thermoplastic elastomers is obtained between the tread surface layer and the second layer adjacent thereto, and additionally, adhesiveness between diene-based rubbers by vulcanization bonding is secured between the second layer and a belt topping rubber. Accordingly, it is considered that, if a content of a thermoplastic-elastomer in the entire tread part is increased, adhesiveness to an adjacent rubber member is secured, thereby not only maintaining durability but also improving grip performance.

A procedure for producing a tire, including a production of a rubber composition that is one embodiment of the present disclosure, is described below in detail. However, the following descriptions are illustrative for explaining the present disclosure, and are not intended to limit the technical scope of the present disclosure to this description range only. Besides, in the present specification, a numerical range identified with "to" means to include the numerical values of both ends.

In the present disclosure, unless otherwise noted, a dimension and an angle of each member of the tire are measured in a state in which the tire is assembled to a standardized rim and filled with air so as to achieve a standardized internal pressure. Besides, the tire is unloaded during the measurements.

A "standardized rim" is a rim defined for each tire in a standard system including a standard, on which the tire is based, by the standard, for example, a "standard rim" in JATMA, "Design Rim" in TRA, or "Measuring Rim" in ETRTO. Besides, in a case of a tire whose size is not defined in the above-described standard system, the "standardized rim" is regarded as a rim having the narrowest width among rims that can be rim-assembled to such a tire, do not cause air leakage between the rims and the tire, and have a minimum diameter.

"Standardized internal pressure" is an air pressure defined for each tire in a standard system including a standard, on which the tire is based, by the standard, for example, "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO. Besides, in a case of a tire whose size is not defined in the above-described standard system, the "standardized internal pressure" is regarded as 250 kPa.

FIG. 1 is an enlarged cross-sectional view showing a portion of a tread of a tire according to the present disclosure. Among portions of the tread of the present disclosure, a portion whose tread surface is not provided with any groove is illustrated in an enlarged view in FIG. 1. In FIG. 1, the vertical direction is a tire radial direction, the horizontal direction is a tire axial direction, and the direction perpendicular to the paper surface is a tire circumferential direction.

As illustrated in the drawing, a tread part of the tire of the present disclosure comprises a first layer and a second layer, an outer surface of the first layer forms the tread surface, and the second layer is adjacent to the inner side of the first layer in the radial direction. The first layer typically corresponds to a cap tread. Moreover, as long as the object of the present disclosure can be achieved, one or more rubber layers may be further provided between the second layer and a belt layer.

Additionally, a rubber layer for giving adhesiveness during molding may be further provided between a layer located on the innermost side in the radial direction among rubber layers constituting the tread part and the belt layer.

In FIG. 1, a double-headed arrow t1 denotes a thickness of the first layer, a double-headed arrow t2 denotes a thickness of the second layer, and a double-headed arrow t3 denotes a thickness of a third layer. An arbitrary point on the tread surface having no groove is denoted by a symbol P in FIG. 1. A straight line denoted by a symbol N is a straight line (normal line) that passes through the point P and that is perpendicular to a tangent plane at the point P. In the present specification, when a tire equatorial plane is defined as the point P in a case where no groove is present on the tire equatorial plane, or when a central part, in a tire width direction, of a land part nearest to the tire equatorial plane is defined as the point P in a case where a groove is present on the tire equatorial plane, the thicknesses t1, t2, and t3 are measured along a normal line N drawn from the point P.

In the present disclosure, the thickness t1 of the first layer is, but not particularly limited to, preferably 2.0 mm or more, more preferably 3.0 mm or more, further preferably 4.0 mm or more, from the viewpoint of grip performance. On the other hand, it is preferably 10.0 mm or less, more preferably 9.0 mm or less, further preferably 8.0 mm or less, from the viewpoint of heat generation.

In the present disclosure, the thickness t2 of the second layer is, but not particularly limited to, preferably 1.0 mm or more, more preferably 1.5 mm or more, further preferably 2.0 mm or more. Moreover, t2 is preferably 5.0 mm or less, more preferably 4.0 mm or less, further preferably 3.0 mm or less.

In the present disclosure, the thickness t3 of the third layer is, but not particularly limited to, preferably 0.5 mm or more, more preferably 1.0 mm or more. Moreover, t3 is preferably 4.0 mm or less, more preferably 3.0 mm or less, further preferably 2.0 mm or less.

The thickness t1 of the first layer relative to a thickness of the entire tread part is preferably 30 to 95%, more preferably 40 to 90%, further preferably 45 to 85%, particularly preferably 50 to 80%. Besides, the thickness of the entire tread part in the present disclosure means a total thickness of the rubber layers constituting the tread part and is calculated by the shortest distance from the tread surface to the belt layer.

A product of a content of a thermoplastic elastomer based on 100 parts by mass of a rubber component of the first layer (parts by mass) and the thickness t1 of the first layer (mm) is preferably 120 or more, more preferably 130 or more, further preferably 140 or more, particularly preferably 150 or more. By setting the product of the content of the thermoplastic elastomer in the first layer and the thickness of the first layer within the above-described ranges, grip performance in the first layer can be improved, so that it is considered that it becomes easy to obtain an excellent grip performance at an initial stage while maintaining durability. Moreover, the product of the content of the thermoplastic elastomer based on 100 parts by mass of the rubber component of the first layer (parts by mass) and the thickness t1 of the first layer (mm) is preferably 400 or less, more preferably 300 or less, further preferably 250 or less, particularly preferably 200 or less.

A product of a content of a thermoplastic elastomer based on 100 parts by mass of a rubber component of the second layer (parts by mass) and the thickness t2 of the second layer (mm) is preferably 6 or more, more preferably 9 or more, further preferably 12 or more, particularly preferably 15 or more. By setting the product of the content of the thermoplastic elastomer in the second layer and the thickness of the second layer within the above-described ranges, a good heat generation can be exhibited also in the second layer while maintaining a good adhesiveness to the first layer in the second layer, so that it is considered that it becomes easy to obtain an excellent grip performance at an initial stage while maintaining durability. Moreover, the product of the content of the thermoplastic elastomer based on 100 parts by mass of the rubber component of the second layer (parts by mass) and the thickness t2 of the second layer (mm) is preferably 150 or less, more preferably 100 or less, further preferably 75 or less, particularly preferably 50 or less.

### [Tread first layer]

As described above, the tread first layer is constituted by the rubber composition comprising the rubber component and the thermoplastic elastomer.

### <Rubber component>

The rubber composition of the first layer preferably comprises, as the rubber component, at least one selected from a group consisting of a styrene-butadiene rubber (SBR), a butadiene rubber (BR), and an isoprene-based rubber, and more preferably comprises a styrene-butadiene rubber (SBR). Moreover, the rubber component may be a rubber component consisting of a SBR.

### (SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated one of these SBRs (hydrogenated SBRs) and the like can also be used. These SBRs may be used alone, or two or more thereof may be used in combination.

Examples of the S-SBR that can be used in the present disclosure include those manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependency of grip performance and blow resistance. Besides, in the present specification, the styrene content of the SBR is calculated by ¹H-NMR measurement.

A vinyl bond amount of the SBR is preferably 10 mol% or more, more preferably 15 mol% or more, further preferably 20 mol% or more, from the viewpoints of ensuring reactivity with silica, rubber strength, and abrasion resistance. Moreover, the vinyl bond amount of the SBR is preferably 70 mol% or less, more preferably 65 mol% or less, further preferably 60 mol% or less, from the viewpoints of prevention of increase in temperature dependence, grip performance, elongation at break, and abrasion resistance. Besides, in the present specification, the vinyl bond amount of the SBR (1,2-bond butadiene unit amount) is measured by infrared absorption spectrometry.

A content of the SBR in 100% by mass of the rubber component of the first layer is preferably 50% by mass or more, more preferably 60% by mass or more, further preferably 65% by mass or more, particularly preferably 70% by mass or more, from the viewpoint of grip performance. Moreover, an upper limit value of the content of the SBR in the rubber component is not particularly limited and may be set to 100% by mass.

### (BR)

The BR is not particularly limited, and those common in the tire industry can be used such as, for example, a BR having a cis content (a cis-1,4 bond content) of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). As these BRs, those commercially available from Ube Industries, Ltd, Sumitomo Chemical Co., Ltd., JSR Corporation, LANXESS, etc. can be used. The BRs may be used alone, or two or more thereof may be used in combination.

As rare-earth-based BRs, those commonly used in the tire industry can be used. As rare-earth element-based catalysts used for synthesis (polymerization) of rare-earth-based BRs, known ones can be used, examples of which include, for example, a lanthanide series rare-earth element compound, an organoaluminium compound, an aluminoxane, a halogen-containing compound, and, as necessary, a catalyst including a Lewis base. Among them, a neodymium (Nd)-based catalyst using a Nd-containing compound as a lanthanide series rare-earth element compound is preferable from the viewpoint that a BR having a high cis content and a low vinyl content can be obtained.

Examples of the SPB-containing BR include those in which 1,2-syndiotactic polybutadiene crystal is chemically bonded with BR and dispersed, but not those in which the crystal is simply dispersed in the BR.

Examples of the modified BR include those obtained by adding a tin compound after polymerizing 1,3-butadiene by a lithium initiator, and further those in which the terminal of the modified BR molecule is bonded with tin-carbon bond (a tin-modified BR), a butadiene rubber having a condensed alkoxysilane compound at its active terminal (a modified BR for silica), and the like.

A content of the BR when compounded based on 100% by mass of the rubber component is preferably 50% by mass or less, more preferably 40% by mass or less, further preferably 30% by mass or less, particularly preferably 20% by mass or less, from the viewpoint of grip performance. Moreover, a lower limit value of the content of the BR when compounded is not particularly limited and can be set to be, for example, 1% by mass or more, 3% by mass or more, 5% by mass or more, 10% by mass or more, or 15% by mass or more.

### (Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber (preferably a natural rubber, more preferably a non-modified natural rubber (NR)) when compounded based on 100% by mass of the rubber component is preferably 50% by mass or less, more preferably 40% by mass or less, further preferably 30% by mass or less, particularly preferably 20% by mass or less, from the viewpoint of grip performance. Moreover, a lower limit value of the content of the isoprene-based rubber when compounded is not particularly limited and can be set to, for example, 1% by mass or more, 3% by mass or more, 5% by mass or more, 10% by mass or more, or 15% by mass or more.

### (Other rubber components)

The rubber component according to the present disclosure may comprise a rubber component other than the above-described isoprene-based rubber, SBR, and BR. A cross-linkable rubber component commonly used in the tire industry can be used as another rubber component, and examples of such a rubber component include, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), and a hydrin rubber, and the like. These other rubber components may be used alone, or two or more thereof may be used in combination.

### <Thermoplastic elastomer>

The rubber composition of the first layer comprises a thermoplastic elastomer from the viewpoint of improving grip performance.

In the present specification, the "thermoplastic elastomer" is a high-molecular compound having elasticity and means a thermoplastic resin material of a copolymer having a polymer constituting a crystalline hard segment having a high melting point and a polymer constituting a non-crystalline soft segment having a low glass transition temperature. In the thermoplastic elastomer, its crystalline hard segment having a high melting point behaves as a pseudo crosslinking point and exhibits elasticity. On the other hand, a rubber has double bonds or the like in a molecular chain, and it generates a three-dimensional network structure by crosslinking (vulcanizing) with addition of sulfur or the like and exhibits elasticity. Accordingly, the hard segment is melted by heating, and the pseudo crosslinking point can be reproduced by cooling, and thus the thermoplastic elastomer is reusable. On the other hand, once the rubber is crosslinked (vulcanized), it generates a three-dimensional network structure and loses flowability, and therefore the rubber is difficult to be reused even though it is heated. Besides, the thermoplastic elastomer of the present disclosure shall not comprise the above-described rubber components.

Examples of the thermoplastic elastomers that can be used in the present disclosure include, but not particularly limited to, for example, a styrene-based thermoplastic elastomer, a polyurethane-based thermoplastic elastomer, an olefin-based thermoplastic elastomers, a polyester-based thermoplastic elastomer, a polyamide-based thermoplastic elastomer, and the like, and a styrene-based thermoplastic elastomer and a polyurethane-based thermoplastic elastomer are preferable. These thermoplastic elastomers may be used alone, or two or more thereof may be used in combination.

The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one or both ends thereof and an elastomer block in a region other than one or both ends thereof. When the molecular structure has a styrene block at least at one end thereof, there is a tendency that a better grip performance can be obtained. Also, the styrene-based thermoplastic elastomer is more preferably a structure having no styrene block at a main chain part other than ends thereof. With such a structure, hardness of the rubber in a normal temperature range does not become too high, thereby obtaining a better grip performance, and there is a tendency that better fracture characteristics and abrasion resistance can be obtained.

Examples of the elastomer block include, for example, vinyl-polydiene, polyisoprene, polybutadiene, polyethylene, polychloroprene, poly 2,3-dimethyl butadiene, and the like. Moreover, as an elastomer block, one obtained by hydrogenating the above-described elastomer block can also be used.

Examples of the styrene-based thermoplastic elastomer include, for example, a styrene-isobutylene block copolymer (SIB), a styrene-butadienestyrene block copolymer (SBS), a styrene-isoprene-styrene block copolymer (SIS), a styrene-ethylene butylene block copolymer (SEB), a styrene-ethylene propylene block copolymer (SEP), a styrene-ethylene butylene-styrene block copolymer (SEBS), a styrene-ethylene butylene-ethylene block copolymer (SEBC), a hydrogenated styrene butadiene copolymer (HSBR), a styrene-ethylene propylene-styrene block copolymer (SEPS), a styrene-ethylene ethylene propylene-styrene block copolymer (SEEPS), a styrene-butadiene butylene-styrene block copolymer (SBBS), and the like.

A styrene-unit content of the styrene-based thermoplastic elastomer (a styrene content) is preferably 5% by mass or more, more preferably 10% by mass or more, from the viewpoint of grip performance. Moreover, it is preferably 30% by mass or less, more preferably 20% by mass or less, from the viewpoint of suppression of heat generation.

The polyurethane-based thermoplastic elastomer is not particularly limited, and, for example, those prepared with polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

Examples of the olefin-based thermoplastic elastomer include, for example, ethylene alpha-olefin copolymers such as an ethylene-propylene copolymer (EPR), an ethylene-butene copolymer (EBR), an ethylene-hexene copolymer (EHR), and an ethylene-octene copolymer (EOR); ethylene alpha-olefin diene terpolymers such as an ethylene-propylene-ethylidene-norbornane copolymer, an ethylene-propylene-butadiene copolymer, and an ethylene-propylene-isoprene copolymer; and the like.

A content of the thermoplastic elastomer based on 100 parts by mass of the rubber component of the first layer is preferably 5 parts by mass or more, more preferably 8 parts by mass or more, further preferably 10 parts by mass or more, particularly preferably 15 parts by mass or more, from the viewpoint of grip performance. Moreover, it is preferably 50 parts by mass or less, more preferably 45 parts by mass or less, further preferably 40 parts by mass or less, further preferably 35 parts by mass or less, particularly preferably 30 parts by mass, from the viewpoint of abrasion resistance.

<Filler>

The rubber composition of the first layer preferably comprises, as a filler, carbon black and/or silica. Moreover, the filler may be prepared as a filler including carbon black or as a filer consisting of carbon black.

### (Carbon black)

As carbon black, those common in the tire industry can be appropriately used, examples of which include, for example, GPF, FEF, HAF, ISAF, SAF, and the like. These carbon black may be used alone, or two or more thereof may be used in combination.

A nitrogen adsorption specific surface area (N₂SA) of carbon black is preferably 50 m²/g or more, more preferably 70 m²/g or more, from the viewpoint of elongation at break. Moreover, it is preferably 200 m²/g or less, more preferably 150 m²/g or less, from the viewpoints of fuel efficiency and processability. Besides, the N₂SA of carbon black is a value measured according to JIS K 6217-2 "Carbon black for rubber industry-Fundamental characteristics-Part 2: Determination of specific surface area-Nitrogen adsorption methods-Single-point procedures".

A dibutyl phthalate (DBP) oil absorption of carbon black is preferably 50 mL/100 g or more, more preferably 70 mL/100 g or more, further preferably 90 mL/100 g, from the viewpoint of reinforcing property. Moreover, it is preferably 400 mL/100 g or less, more preferably 350 mL/100 g or less, from the viewpoints of fuel efficiency and processability. Besides, the DBP oil absorption of the carbon black is a value measured according to JIS K 6221.

A content of carbon black based on 100 parts by mass of the rubber component of the first layer is preferably 5 parts by mass or more, more preferably 10 parts by mass or more, further preferably 20 parts by mass or more, particularly preferably 40 parts by mass, from the viewpoint of grip performance. Moreover, an upper limit of the content of carbon black is, but not particularly limited to, preferably 150 parts by mass or less, more preferably 130 parts by mass or less, further preferably 110 parts by mass or less, from the viewpoints of fuel efficiency and abrasion resistance.

### (Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination.

A nitrogen adsorption specific surface area (N₂SA) of silica is preferably 140 m²/g or more, more preferably 170 m²/g or more, further preferably 200 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica in the present specification is a value measured by a BET method according to ASTM D3037-93.

An average primary particle size of silica is preferably 20 nm or less, more preferably 18 nm or less, further preferably 16 nm or more. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be more improved, and reinforcing property, fracture characteristics, and abrasion resistance can be further improved. Besides, the average primary particle size of silica can be calculated by observing silica with a transmission or scanning electron microscope, measuring 400 or more primary particles of silica observed in the field of view, and averaging them.

A content of silica when compounded based on 100 parts by mass of the rubber component is preferably 5 parts by mass or more, more preferably 10 parts by mass or more, further preferably 20 parts by mass or more, from the viewpoint of wet grip performance. Moreover, it is preferably 150 parts by mass or less, more preferably 130 parts by mass or less, further preferably 110 parts by mass or less, particularly preferably 95 parts by mass or less, from the viewpoint of abrasion resistance.

A total content of silica and carbon black based on 100 parts by mass of the rubber component of the first layer is preferably 40 parts by mass or more, more preferably 50 parts by mass or more, further preferably 60 parts by mass or more, from the viewpoint of abrasion resistance. Moreover, it is preferably 180 parts by mass or less, more preferably 160 parts by mass or less, further preferably 140 parts by mass or less, from the viewpoints of fuel efficiency and elongation at break.

Silica is preferably used in combination with a silane coupling agent. The silane coupling agent is not particularly limited, and any silane coupling agents conventionally used in combination with silica in the tire industry can be used. Concrete examples of the silane coupling agent include, for example, a silane coupling agent having a sulfide group such as bis(3-triethoxysilylpropyl)disulfide and bis(3-triethoxysilylpropyl)tetrasulfide; a silane coupling agent having a mercapto group such as 3-mercaptopropyltrimethoxysilane, 3-mercaptopropyltriethoxysilane, 2-mercaptoethyltrimethoxysilane, 2-mercaptoethyltriethoxysilane, NXT-Z30, NXT-Z45, NXT-Z60, and NXT-Z100 manufactured by Momentive Performance Materials, and SI363 manufactured by Evonik Degussa GmbH; a silane coupling agent having a tioester group such as 3-octanoylthio-1-propyltriethoxysilane, 3-hexanoylthio-1-propyltriethoxysilane, and 3-octanoylthio-1-propyltrimethoxysilane; a silane coupling agent having a vinyl group such as vinyltriethoxysilane and vinyltrimethoxysilane; a silane coupling agent having an amino group such as 3-aminopropyltriethoxysilane, 3-aminopropyltrimethoxysilane, and 3-(2-aminoethyl)aminopropyltriethoxysilane; a silane coupling agent having a glycidoxy group such as γ-glycidoxypropyltriethoxysilane and γ-glycidoxypropyltrimethoxysilane; a silane coupling agent having a nitro group such as 3-nitropropyltrimethoxysilane and 3-nitropropyltriethoxysilane; and a silane coupling agent having a chloro group such as 3-chloropropyltrimethoxysilane and 3-chloropropyltriethoxysilane. Among them, a silane coupling agent having a sulfide group, a silane coupling agent having a mercapto group, and a silane coupling agent having a thioester group are preferable, and a silane coupling agent having a mercapto group is more preferable. These silane coupling agents may be used alone, or two or more thereof may be used in combination.

A content of the silane coupling agent when compounded based on 100 parts by mass of the rubber component is preferably 0.5 parts by mass or more, more preferably 1.0 parts by mass or more, further preferably 2.0 parts by mass or more, particularly preferably 4.0 parts by mass or more, from the viewpoint of improvement of silica dispersibility. Moreover, it is preferably 20 parts by mass or less, more preferably 12 parts by mass or less, further preferably 10 parts by mass or less, particularly preferably 9.0 parts by mass, from the viewpoint of preventing deterioration of abrasion resistance.

As filler, other fillers other than silica and carbon black may be further used. Such fillers are not particularly limited, and any fillers commonly used in this field can be used, such as, for example, aluminum hydroxide, alumina (aluminum oxide), calcium carbonate, magnesium sulfate, talc, and clay. These fillers may be used alone, or two or more thereof may be used in combination

### <Softening agent>

The rubber composition of the first layer preferably comprises a softening agent in order to improve grip performance. Examples of the softening agent include, for example, a resin component, oil, and a liquid rubber, and the like.

The rubber composition of the first layer may comprise a resin component for the purpose of improving adhesiveness to an adjacent rubber member. Examples of the resin component include, but not particularly limited to, a petroleum resin, a terpene-based resin, a rosin-based resin, a phenol-based resin, and the like, which are commonly used in the tire industry. These resin components may be used alone, or two or more thereof may be used in combination.

In the present specification, the "C5-based petroleum resin" means a resin obtained by polymerizing C5 fractions. Examples of C5 fractions include, for example, a petroleum fraction comparable to 4 to 5 carbon atoms, such as cyclopentadiene, pentene, a pentadiene, and isoprene. A dicyclopentadiene resin (DCPD resin) is appropriately used as a C5-based petroleum resin.

In the present specification, an "aromatic-based petroleum resin" means a resin obtained by polymerizing C9 fractions and may be those undergoing hydrogeneration or modification. Examples of C9 fractions include, for example, a petroleum fraction comparable to 8 to 10 carbon atoms, such as a vinyltoluene, an alkylstyrene, indene, and a methylindene. As a specific example of the aromatic-based petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, a "C5-C9-based petroleum resin" means a resin obtained by polymerizing the C5 fractions and the C9 fractions and may be those undergoing hydrogeneration or modification. Examples of the C5 fractions and the C9 fractions include the above-described petroleum fractions. As the C5-C9-based petroleum resin, for example, those commercially available from Tosoh Corporation, LUHUA Chemical Co., Ltd., etc. are appropriately used.

Examples of the terpene-based resin include a polyterpene resin of at least one selected from terpenic compounds such as α-pinene, a β-pinene, a limonene, and a dipentene; an aromatic modified terpene resin made from the terpenic compound and an aromatic compound; a terpene phenol resin made from a terpenic compound and a phenol-based compound; and resin obtained by hydrogenating these terpene-based resin (hydrogenated terpene-based resin). Examples of the aromatic compounds from which the aromatic modified terpene resin is made include, for example, styrene, α-methylstyrene, a vinyltoluene, a divinyltoluene, and the like. Examples of the phenol-based compounds from which the terpene phenol resin is made include, for example, phenol, bisphenol A, cresol, xylenol, and the like.

Examples of the rosin-based resin include, but not particularly limited to, for example, a natural rosin resin, a rosin-modified resin obtained by modifying the natural rosin resin by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A softening point of the resin component is preferably 60°C or higher, more preferably 65°C or higher, from the viewpoint of grip performance. Moreover, it is preferably 150°C or lower, more preferably 140°C or lower, further preferably 130°C or lower, from the viewpoints of processability and improvement in dispersibility of the rubber component and the filler. Besides, the softening point in the present specification may be defined as a temperature at which a sphere drops when the softening point specified in JIS K 6220-1: 2001 is measured with a ring and ball softening point measuring device.

A content of the resin component when compounded based on 100 parts by mass of the rubber component is preferably 1 parts by mass or more, more preferably 5 parts by mass or more, further preferably 10 parts by mass or more, particularly preferably 12 parts by mass or more, from the viewpoint of grip performance. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, process oils, vegetable oils and fats, animal oils and fats, and the like. Examples of the process oils include paraffinic process oils, naphthenic process oils, aromatic process oils, and the like. Moreover, a process oil having a low polycyclic-aromatic-compound (PCA) content for environmental measures can also be used. Examples of the process oil having a low PCA content include mild extraction solvates (MES), treated distillate aromatic extracts (TDAE), heavy naphthenic oil, and the like.

A content of oil when compounded based on 100 parts by mass of the rubber component is preferably 10 parts by mass or more, more preferably 15 parts by mass or more, further preferably 20 parts by mass or more, from the viewpoint of processability. Moreover, it is preferably 120 parts by mass or less, more preferably 110 parts by mass or less, further preferably 100 parts by mass or less, from the viewpoint of abrasion resistance. Besides, in the present specification, the content of oil also includes an amount of oil contained in an oil-extended rubber.

Although the liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 parts by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 20 parts by mass or less.

A content of the softening agent when compounded based on 100 parts by mass of the rubber component (a total amount of all of a plurality of softening agents when used in combination) is preferably 20 parts by mass or more, more preferably 30 parts by mass or more, further preferably 40 parts by mass or more, particularly preferably 50 parts by mass or more, from the viewpoint of grip performance. Moreover, it is preferably 130 parts by mass or less, more preferably 120 parts by mass or less, further preferably 110 parts by mass or less, particularly preferably 100 parts by mass or less, from the viewpoint of processability.

### <Other compounding agents>

The rubber composition of the first layer can appropriately comprise compounding agents conventionally and commonly used in the tire industry, such as, for example, wax, processing aid, stearic acid, zinc oxide, an antioxidant, a vulcanizing agent such as sulfur, and a vulcanization accelerator, in addition to the above-described components.

A content of wax when compounded based on 100 parts by mass of the rubber component is preferably 0.5 parts by mass or more, more preferably 1 parts by mass or more, from the viewpoint of weather resistance of a rubber. Moreover, it is preferably 10 parts by mass or less, more preferably 5 parts by mass or less, from the viewpoint of prevention of whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, those commercially available from, for example, Schill & Seilacher, Performance Additives, etc. can be used.

A content of processing aid when compounded based on 100 parts by mass of the rubber component is preferably 0.5 parts by mass or more, more preferably 1 parts by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, each amine-based, quinoline-based, quinone-based, phenol-based, and imidazole-based compound, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N, N'-diphenyl-p-phenylenediamine, N, N'-di-2-naphthyl-p-phenylenediamine, N-cyclohexyl-N'-phenyl-p-phenylenediamine, N, N'-bis(1 - methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N, N'-diaryl-p-phenylenediamine, hindered diallyl-p-phenylenediamine, phenylhexyl-p-phenylenediamine, and phenyloctyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 parts by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 parts by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 parts by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of prevention of deterioration. Besides, a content of the vulcanizing agent in a case where an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. Those commercially available from Taoka Chemical Co., Ltd., LANXESS, Flexsys, etc. can be used as these vulcanizing agents other than sulfur.

Examples of the vulcanization accelerator include, but not particularly limited to, for example, sulfenamide-based, thiazole-based, thiuram-based, thiourea-based, guanidine-based, dithiocarbamic acid salt-based, aldehyde-amine-based or aldehyde-ammonia-based, imidazoline-based, and xanthate-based vulcanization accelerators. Among them, sulfenamide-based and thiuram-based vulcanization accelerators are preferable from the viewpoint of obtaining a desired effect more appropriately. Although it is considered that it becomes easy to cause inhibition of a vulcanization reaction due to the thermoplastic elastomer in the rubber composition according to the present disclosure, it becomes easy to obtain vulcanization adhesiveness between adjacent rubber layers by using a thiuram-based vulcanization accelerator having high reactivity, and it is considered that durability can be improved.

Examples of the sulfenamide-based vulcanization accelerator include (N-cyclohexyl-2-benzothiazolyl sulfenamide (CBS), N-(tert-butyl)-2-benzothiazolyl sulfenamide (TBBS), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. Examples of the dithiocarbamic acid salt-based vulcanization accelerator include zinc dibutyldithiocarbamate, zinc dibenzyldithiocarbamate, sodium dibutyldithiocarbamate, cupper dimethyldithiocarbamate, ferric dimethyldithiocarbamate, tellurium diethyldithiocarbamate, and the like. These vulcanization accelerators may be used alone, or two or more thereof may be used in combination.

A content of the vulcanization accelerator when compounded based on 100 parts by mass of the rubber component is preferably 1.0 parts by mass or more, more preferably 1.5 parts by mass or more, further preferably 2.0 parts by mass or more, particularly preferably 2.5 parts by mass or more. Moreover, the content of the vulcanization accelerator is preferably 8.0 parts by mass or less, more preferably 7.0 parts by mass or less, further preferably 6.0 parts by mass or less.

At least one of the rubber composition of the first layer and the rubber composition of the second layer preferably comprises a thiuram-based vulcanization accelerator. A content of the thiuram-based vulcanization accelerator when compounded based on 100 parts by mass of the rubber component is preferably 0.5 parts by mass or more, more preferably 1.0 parts by mass or more, further preferably 1.5 parts by mass or more. Moreover, the content of the thiuram-based vulcanization accelerator is preferably 4.0 parts by mass or less, more preferably 3.0 parts by mass or less, further preferably 2.0 parts by mass or less.

### [Tread second layer]

As described above, the tread second layer is constituted by a rubber composition comprising a rubber component and a thermoplastic elastomer.

### <Rubber component>

The rubber composition of the second layer preferably comprises, as a rubber component, at least one selected from a group consisting of a styrene-butadiene rubber (SBR), a butadiene rubber (BR), and an isoprene-based rubber, and more preferably comprises a styrene-butadiene rubber (SBR). Moreover, the rubber component may be prepared as a rubber component including a SBR and an isoprene-based rubber, as a rubber component consisting of a SBR, or as a rubber component consisting of a SBR and an isoprene-based rubber.

As the SBR, the BR, the isoprene-based rubber, and the other rubber components, the similar rubber components to those of the rubber composition of the first layer can be appropriately used in the similar aspects.

### <Thermoplastic elastomer>

The rubber composition of the second layer comprises a thermoplastic elastomer. As the thermoplastic elastomer, the similar one to that of the rubber composition of the first layer can be appropriately used in the similar aspects. Besides, from the viewpoint of grip performance, a content of a thermoplastic elastomer based on 100 parts by mass of the rubber component of the first layer is preferably higher than a content of a thermoplastic elastomer based on 100 parts by mass of the rubber component of the second layer.

The content of the thermoplastic elastomer based on 100 parts by mass of the rubber component of the second layer is preferably 1 parts by mass or more, more preferably 3 parts by mass or more, further preferably 5 parts by mass or more, particularly preferably 7 parts by mass or more, from the viewpoint of grip performance. Moreover, it is preferably 30 parts by mass or less, more preferably 25 parts by mass or less, further preferably 20 parts by mass or less, particularly preferably 15 parts by mass or less, from the viewpoint of abrasion resistance.

### <Filler>

The rubber composition of the second layer preferably comprises, as a filler, carbon black and/or silica, and more preferably comprises carbon black. Alternatively, when the rubber composition of the second layer comprises silica, it preferably comprises a silane coupling agent together with silica. As carbon black, silica, the silane coupling agent, and the other fillers, the similar ones to that of the rubber composition of the first layer can be appropriately used in the similar aspects.

A content of carbon black based on 100 parts by mass of the rubber component of the second layer is preferably 30 parts by mass or more, more preferably 40 parts by mass or more, further preferably 50 parts by mass or more, particularly preferably 60 parts by mass or more, from the viewpoint of durability. Moreover, an upper limit of the content of carbon black is, but not particularly limited to, preferably 150 parts by mass or less, more preferably 130 parts by mass or less, further preferably 110 parts by mass or less, from the viewpoints of fuel efficiency and abrasion resistance.

### <Softening agent>

The rubber composition of the second layer preferably comprises a softening agent. Examples of the softening agent include, for example, a resin component, oil, a liquid rubber, and the like, and the similar ones to those of the rubber composition of the first layer can be appropriately used in the similar aspects.

### <Other compounding agents>

The rubber composition of the second layer can appropriately comprise compounding agents conventionally and commonly used in the tire industry, such as, for example, wax, processing aid, an antioxidant, stearic acid, zinc oxide, a vulcanizing agent such as sulfur, and a vulcanization accelerator, in addition to the above-described components. As the compounding agents, the similar ones to those of the rubber composition of the first layer can be appropriately used in the similar aspects.

As described above, the tread part of the tire of the present disclosure may further have one or more rubber components between the second layer and the belt layer as long as the object of the present disclosure is achieved. The tread part preferably has, between the second layer and the belt layer, a third layer constituted by a rubber composition comprising a rubber component and a sulfur.

The rubber composition of the rubber layer capable of being present between the second layer and the belt layer preferably comprises, as a rubber component, at least one selected from a group consisting of a styrene-butadiene rubber (SBR), a butadiene rubber (BR), and an isoprene-based rubber, and more preferably comprises a styrene-butadiene rubber (SBR). Moreover, the rubber component may be a rubber component including a SBR and an isoprene-based rubber, a rubber component consisting of a SBR, or a rubber component consisting of a SBR and an isoprene-based rubber.

As the SBR, the BR, the isoprene-based rubber, and the other rubber components, the similar ones to those of the rubber composition of the first layer can be appropriately used in the similar aspects.

The rubber composition of the rubber layer capable of being present between the second layer and the belt layer may comprise a thermoplastic elastomer. As the thermoplastic elastomer, the similar one to that of the rubber composition of the first layer can be appropriately used in the similar aspects. Besides, from the viewpoint of grip performance, a content of a thermoplastic elastomer based on 100 parts by mass of the rubber component of the rubber layer (preferably the third layer) capable of being present between the second layer and the belt layer is preferably lower than a content of a thermoplastic elastomer based on 100 parts by mass of the rubber component of the second layer. The content of the thermoplastic elastomer based on 100 parts by mass of the rubber component of the rubber layer (preferably the third layer) capable of being present between the second layer and the belt layer is preferably 1 parts by mass or more, more preferably 2 parts by mass or more, further preferably 3 parts by mass or more. Moreover, this content of the thermoplastic elastomer is preferably 20 parts by mass or less, more preferably 15 parts by mass or less, further preferably 10 parts by mass or less.

The rubber composition of the rubber layer capable of being present between the second layer and the belt layer preferably comprises, as a filler, carbon black and/or silica. Alternatively, when the rubber composition of the rubber layer comprises silica, it preferably comprises a silane coupling agent together with silica. As carbon black, silica, the silane coupling agent, and the other fillers, the similar ones to that of the rubber composition of the first layer can be appropriately used in the similar aspects.

The rubber composition of the rubber layer capable of being present between the second layer and the belt layer preferably comprises a softening agent. Examples of the softening agent include, for example, a resin component, oil, a liquid rubber, and the like, and the similar ones to those of the rubber composition of the first layer can be appropriately used in the similar aspects.

The rubber composition of the rubber layer capable of being present between the second layer and the belt layer can appropriately comprise compounding agents conventionally and commonly used in the tire industry, such as, for example, wax, processing aid, an antioxidant, stearic acid, zinc oxide, a vulcanizing agent such as sulfur, and a vulcanization accelerator, in addition to the above-described components. As the compounding agents, the similar ones to those of the rubber composition of the first layer can be appropriately used in the similar aspects.

Besides, when the tread part has a three-layer structure, a content of sulfur based on 100 parts by mass of the rubber composition of the third layer is preferably higher than a content of sulfur based on 100 parts by mass of the rubber component of the second layer from the viewpoint of further improvement of adhesiveness to an adjacent belt topping rubber. The content of sulfur based on 100 parts by mass of the rubber component of the third layer is preferably 1.0 parts by mass or more, more preferably 1.5 parts by mass or more, further preferably 1.8 parts by mass or more. Moreover, it is preferably 5.0 parts by mass or less, more preferably 4.0 parts by mass or less, further preferably 3.0 parts by mass, from the viewpoint of prevention of deterioration.

The rubber composition according to the present disclosure can be produced by a publicly-known method. It can be produced by, for example, a method of kneading components other than a vulcanizing agent and a vulcanization accelerator, of the above-described components, with a known kneading machine commonly used in the tire industry, such as a Banbury mixer, a kneader, and an open roll, and then adding the vulcanizing agent and the vulcanization accelerator to the kneaded product for further kneading, followed by vulcanizing the kneaded product, and the like. For example, in the kneading step, the kneading is performed at 80°C to 170°C for 1 to 30 minutes, and in the vulcanizing step, the vulcanizing is performed at 130°C to 190°C for 3 to 20 minutes.

### [Tire]

The tire according to the present disclosure comprises a tread comprising the first layer and the second layer and may be a pneumatic tire or a non-pneumatic tire. Moreover, examples of the pneumatic tire include a tire for a passenger car, a tire for a truck/bus, a tire for a two-wheeled vehicle, a high-performance tire, and the like. Besides, the high-performance tire in the present specification is a tire particularly excellent in grip performance, and its concept includes a racing tire used for a racing vehicle.

The tire comprising the tread part comprising the first layer and the second layer can be produced using the above-described rubber compositions by a usual method. That is, the tire can be produced by: extruding an unvulcanized rubber composition, obtained by compounding the above-described components for the rubber component as necessary, into a shape of the tread, attaching it together with other tire members on a tire molding machine, and molding them by a usual method to form an unvulcanized tire, followed by heating and pressurizing this unvulcanized tire in a vulcanizing machine.

### EXAMPLE

Hereinafter, the present disclosure will be described based on Examples, though the present disclosure is not limited to these Examples.

Various chemicals used in Examples and Comparative examples are collectively shown below.
SBR1: Tafden 4850 manufactured by Asahi Kasei Corporation (unmodified S-SBR, styrene content: 40% by mass, vinyl bond amount: 46% by mass, comprising 50 parts by mass of an oil content based on 100 parts by mass of a rubber solid content)
SBR2: Tafden 3830 manufactured by Asahi Kasei Corporation (unmodified S-SBR, styrene content: 33% by mass, vinyl bond amount: 34%, comprising 37.5 parts by mass of an oil content based on 100 parts by mass of a rubber solid content)
NR: TSR20
Carbon black 1: Seast 9SAF manufactured by TOKAI CARBON CO., LTD. (N₂SA: 142 m²/g, DBP absorption: 115 mL/100 g)
Carbon black 2: SHOW BLACK N330 manufactured by Cabot Japan K.K. (N₂SA: 75 m²/g, DBP absorption: 102 mL/100 g)
Silica: Ultrasil (Registered Trademark) 9100G manufactured by Evonik Degussa GmbH (N₂SA: 235 m²/g, average particle diameter: 15 nm)
Thermoplastic elastomer 1: DYNARON 4600P manufactured by JSR Corporation (Styrene-ethylene butylene-ethylene block copolymer (SEBC), styrene content: 20%)
Thermoplastic elastomer 2: "HYBRAR 5125" manufactured by Kuraray Co., Ltd. (Styrene-isoprene-styrene block copolymer (SIS), styrene content: 20%)
Thermoplastic elastomer 3: MIRACTRAN P22M manufactured by Nippon Miractran Co, Ltd. (Polyurethane-based thermoplastic elastomer)
Resin component: PETROTACK 100V manufactured by Tosoh Corporation (C5-C9-based petroleum resin, softening point: 96°C, Mw: 3800, SP value: 8.3)
Oil: VivaTec 500 manufactured by H&R Group (TDAE oil)
Antioxidant: Antigen 6C manufactured by Sumitomo Chemical Co., Ltd. (N-(1,3-dimethylbutyl)-N'-phenyl-p-phenylenediamine)
Wax: Sunnoc N manufactured by Ouchi Shinko Chemical Industry Co., Ltd.
Stearic acid: Stearic acid "CAMELLIA" manufactured by NOF CORPORATION
Zinc oxide: Zinc oxide No. 2 manufactured by Mitsui Mining & Smelting Co., Ltd.
Sulfur: Powdered sulfur manufactured by Karuizawa Sulfur Co. Ltd.
Vulcanization accelerator 1: Nocceler CZ manufactured by Ouchi Shinko Chemical Industry Co., Ltd. (N-cyclohexyl-2-benzothiazolylsulfenamide)
Vulcanization accelerator 2: Sanceler TBZTD manufactured by Sanshin Chemical Industry Co., Ltd. (tetrabenzylthiuram disulfide)
Vulcanization accelerator 3: Sanceler NS-G manufactured by Sanshin Chemical Industry Co., Ltd. (N-(tert-butyl)-2-benzothiazolylsulfenamide)

### (Examples and Comparative examples)

According to the compounding formulations shown in Tables 1 to 3, using a 1.7 L Banbury mixer manufactured by Kobe Steel, Ltd., all chemicals other than sulfur and vulcanization accelerators were kneaded. Next, using an open roll, sulfur and the vulcanization accelerators were added to the obtained kneaded product, and the mixture was kneaded to obtain an unvulcanized rubber composition. The obtained unvulcanized rubber composition was molded into a shape of each of a first layer, a second layer, and a third layer of a tread and attached together with other tire members to produce an unvulcanized tire, and the unvulcanized tire was vulcanized at 170°C, thereby obtaining test tires (205/65R15).

### <Adhesiveness test>

According to the configuration shown in Table 4, unvulcanized rubber compositions of first, second, and third layers of a tread are layered, and the layered rubber compositions were press-vulcanized at 170°C for 15 minutes, thereby obtaining vulcanization-bonded rubber compositions. In this case, vulcanization was performed such that cellophane was interposed therebetween by about 60 mm from its end in order to form a grip tab for a testing machine. An adhesiveness test for the vulcanization-bonded rubber compositions was performed in accordance with JIS K 6256-1 "Rubber, vulcanized or thermoplastic-Determination of adhesion strength- Part 1: Adhesion to textile fabric". Specifically, a specimen was prepared by cutting a rubber sheet of each of the vulcanization-bonded rubber compositions into a piece having a width of 25 mm, and the specimen was peeled off at a speed of 50 mm/min. An adhesiveness between the first layer and the second layer was indicated as an index with peeling strengths of Comparative examples 3 and 11 being as 100, an adhesive property between the second layer and the third layer was indicated as an index with peeling strengths of Comparative examples 6 and 14 being as 100, and an adhesive property between the tread innermost layer and the belt layer was indicated as an index with peeling strengths of Comparative examples 1 and 9 being as 100. A greater adhesiveness index means more excellent adhesiveness. Besides, the tread innermost layer refers to a first layer when the number of layers of the tread part is one, a second layer when the number of layers of the tread part is two, or a third layer when the number of layers of the tread part is three.

### <Durability test>

A running time until a peel-off damage occurred on a tread rubber occurred was measured using a drum testing machine at a speed of 230 km/h on a drum under a condition of a standardized rim of 6.0 J, an internal pressure of 260 kPa, a load of 4.5 kN, and a road surface temperature at 80°C. Results of the measurement were indicated as indexes with reference Comparative examples (Comparative example 7 in Table 4 and Comparative example 15 in Table 5) being as 100. A higher index means more excellent durability at a high temperature or during high-speed running.

### < Grip performance test at initial stage>

Each test tire was mounted on all wheels of a domestic 4WD vehicle with a displacement of 2000 cc, and the 4WD vehicle was run fifteen laps on a test course with a dry asphalt road surface at 3 km per one lap. A time was measured for each lap, and an inverse value of a difference between a lap time on the second lap and the best lap time was indicated as an index with reference Comparative examples (Comparative example 7 in Table 4 and Comparative example 15 in Table 5) being as 100. A higher index means a smaller difference between the lap time on the second lap and the best lap time and higher grip performance at the start of running.

### <Grip stability test>

Each test tire was mounted on all wheels of a domestic 4WD vehicle with a displacement of 2000 cc, and the 4WD vehicle was run fifteen laps on a test course with a dry asphalt road surface at 3 km per one lap. The best lap time and an average lap time of the tenth to fifteenth laps were measured, and an inverse value of a difference between these times was indicated as an index with reference Comparative examples (Comparative example 7 in Table 4 and Comparative example 15 in Table 5) being as 100. A greater numerical value means higher grip stability.

Total performance indexes (a total of a durability index, a grip performance index at an initial stage, and a grip stability index) are collectively shown in Tables 4 and 5.

**Table 1**

| Compounding of first layer | Production example | | | | | | | | | |
|---|---|---|---|---|---|---|---|---|---|---|
| | A1 | A2 | A3 | A4 | A5 | A6 | A7 | A8 | A9 | A10 |
| Compounding amount (part by mass) | | | | | | | | | | |
| SBR 1 | 150 | 150 | 150 | 150 | 150 | 150 | 150 | 150 | 150 | 150 |
| Carbon black 1 | 100 | 100 | 100 | 100 | 100 | 10 | 10 | 10 | 10 | 10 |
| Silica | - | - | - | - | - | 90 | 90 | 90 | 90 | 90 |
| Thermoplastic elastomer 1 | _ | 30 | - | _ | 10 | - | 30 | - | - | 10 |
| Thermoplastic elastomer 2 | - | - | 20 | - | - | - | - | 20 | - | - |
| Thermoplastic elastomer 3 | - | - | - | 30 | - | - | - | - | 30 | - |
| Resin component | - | - | - | - | 10 | - | - | - | - | 10 |
| Oil | 40 | 30 | 35 | 30 | 30 | 40 | 30 | 35 | 30 | 30 |
| Antioxidant | 3.5 | 3.5 | 3.5 | 3.5 | 3.5 | 3.5 | 3.5 | 3.5 | 3.5 | 3.5 |
| Wax | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 |
| Zinc oxide | 1.5 | 1.5 | 1.5 | 1.5 | 1.5 | 1.5 | 1.5 | 1.5 | 1.5 | 1.5 |
| Sulfur | 1.3 | 1.3 | 1.3 | 1.3 | 1.3 | 1.3 | 1.3 | 1.3 | 1.3 | 1.3 |
| Vulcanization accelerator 1 | 3.0 | 3.0 | 3.0 | 3.0 | 3.0 | 3.0 | 3.0 | 3.0 | 3.0 | 3.0 |
| Vulcanization accelerator 2 | 2.0 | 2.0 | 2.0 | 2.0 | 2.0 | 2.0 | 2.0 | 2.0 | 2.0 | 2.0 |

**Table 2**

| Compounding of second layer | Production example | | | | | | |
|---|---|---|---|---|---|---|---|
| | B1 | B2 | B3 | B4 | B5 | B6 | B7 |
| Compounding amount (part by mass) | | | | | | | |
| SBR 1 | - | - | 150 | 150 | 150 | 150 | 150 |
| SBR 2 | 110 | 110 | - | - | - | - | - |
| NR | 20 | 20 | - | - | - | - | - |
| Carbon black 1 | - | - | 100 | 100 | 100 | 100 | 100 |
| Carbon black 2 | 40 | 40 | - | - | - | - | - |
| Thermoplastic elastomer 1 | - | 5 | - | 30 | 10 | - | - |
| Thermoplastic elastomer 2 | - | - | - | - | - | 10 | - |
| Thermoplastic elastomer 3 | - | - | - | - | - | - | 10 |
| Oil | 50 | 40 | 50 | 50 | 50 | 50 | 50 |
| Antioxidant | 3.5 | 3.5 | 3.5 | 3.5 | 3.5 | 3.5 | 3.5 |
| Wax | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 |
| Zinc oxide | 1.5 | 1.5 | 1.5 | 1.5 | 1.5 | 1.5 | 1.5 |
| Sulfur | 1.3 | 1.3 | 1.3 | 1.3 | 1.3 | 1.3 | 1.3 |
| Vulcanization accelerator 1 | 3.0 | 3.0 | 3.0 | 3.0 | 3.0 | 3.0 | 3.0 |
| Vulcanization accelerator 2 | 2.0 | 2.0 | 2.0 | 2.0 | 2.0 | 2.0 | 2.0 |

**Table 3**

| Compounding of third layer | Production example | |
|---|---|---|
| | C1 | C2 |
| Compounding amount (part by mass) | | |
| SBR 2 | 110 | 110 |
| NR | 20 | 20 |
| Carbon black 2 | 40 | 40 |
| Thermoplastic elastomer 2 | - | 5.0 |
| Oil | 10 | 10 |
| Antioxidant | 3.5 | 3.5 |
| Stearic acid | 1.5 | 1.5 |
| Zinc oxide | 1.5 | 1.5 |
| Sulfur | 2.5 | 2.5 |
| Vulcanization accelerator 3 | 3.0 | 3.0 |

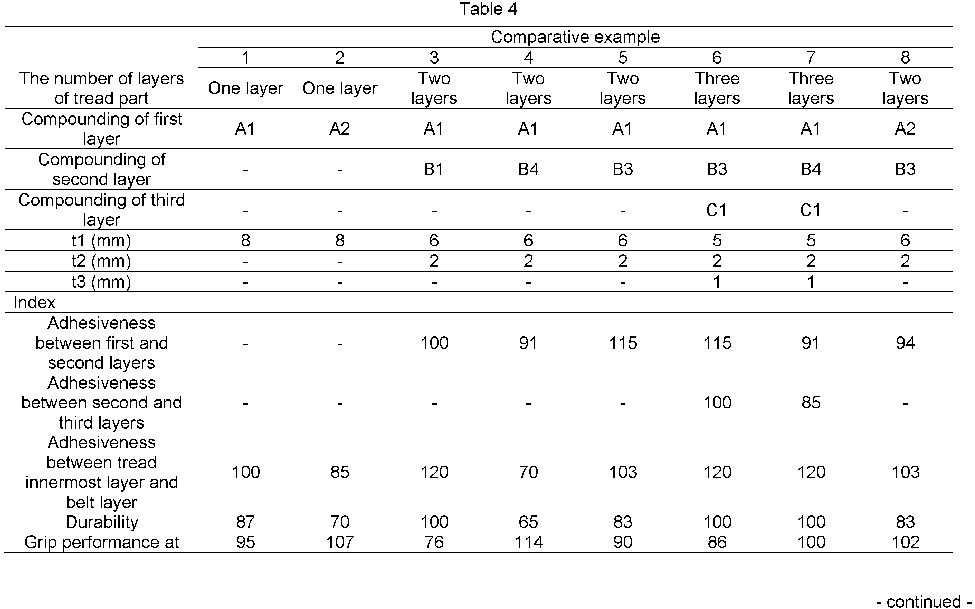

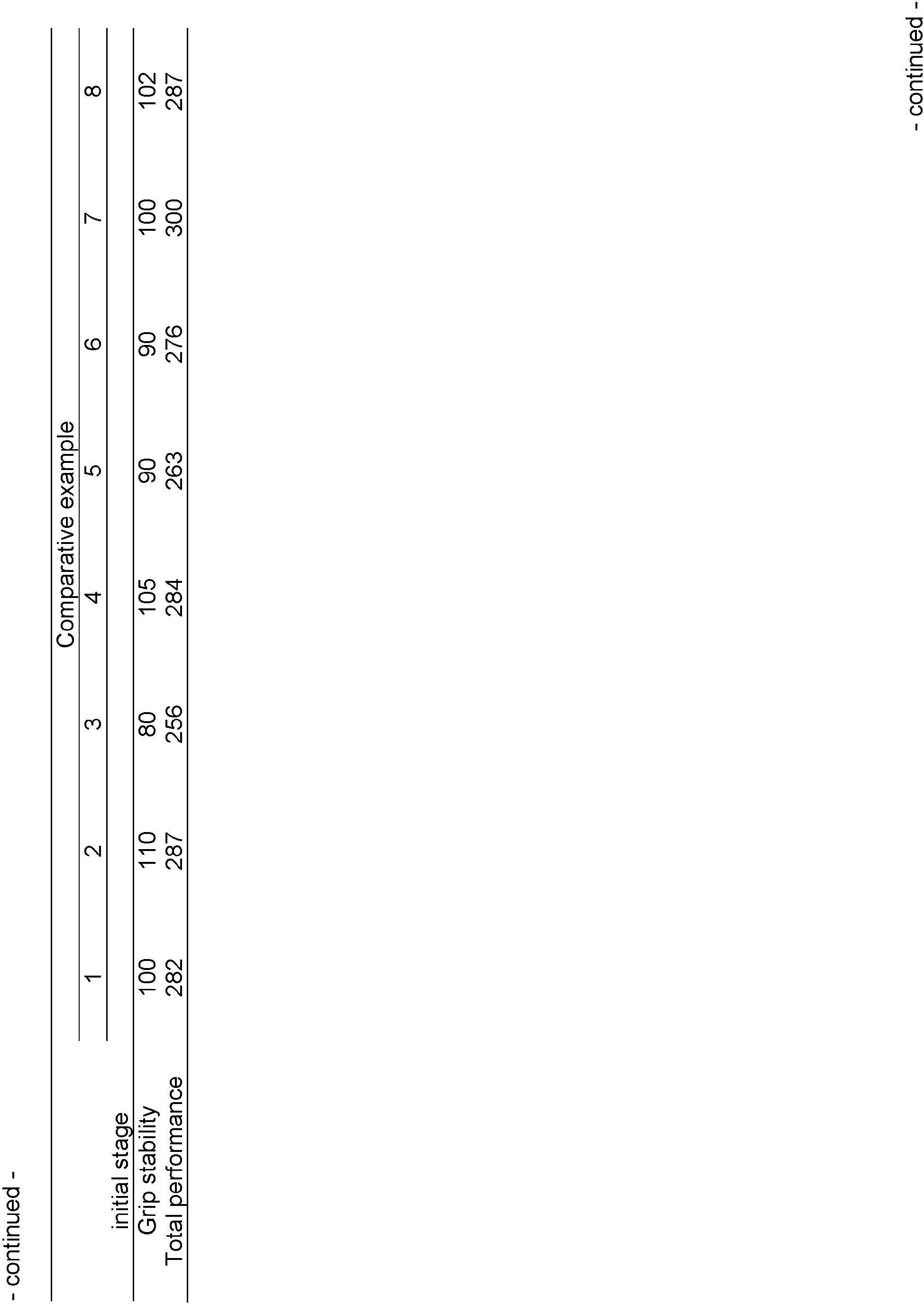

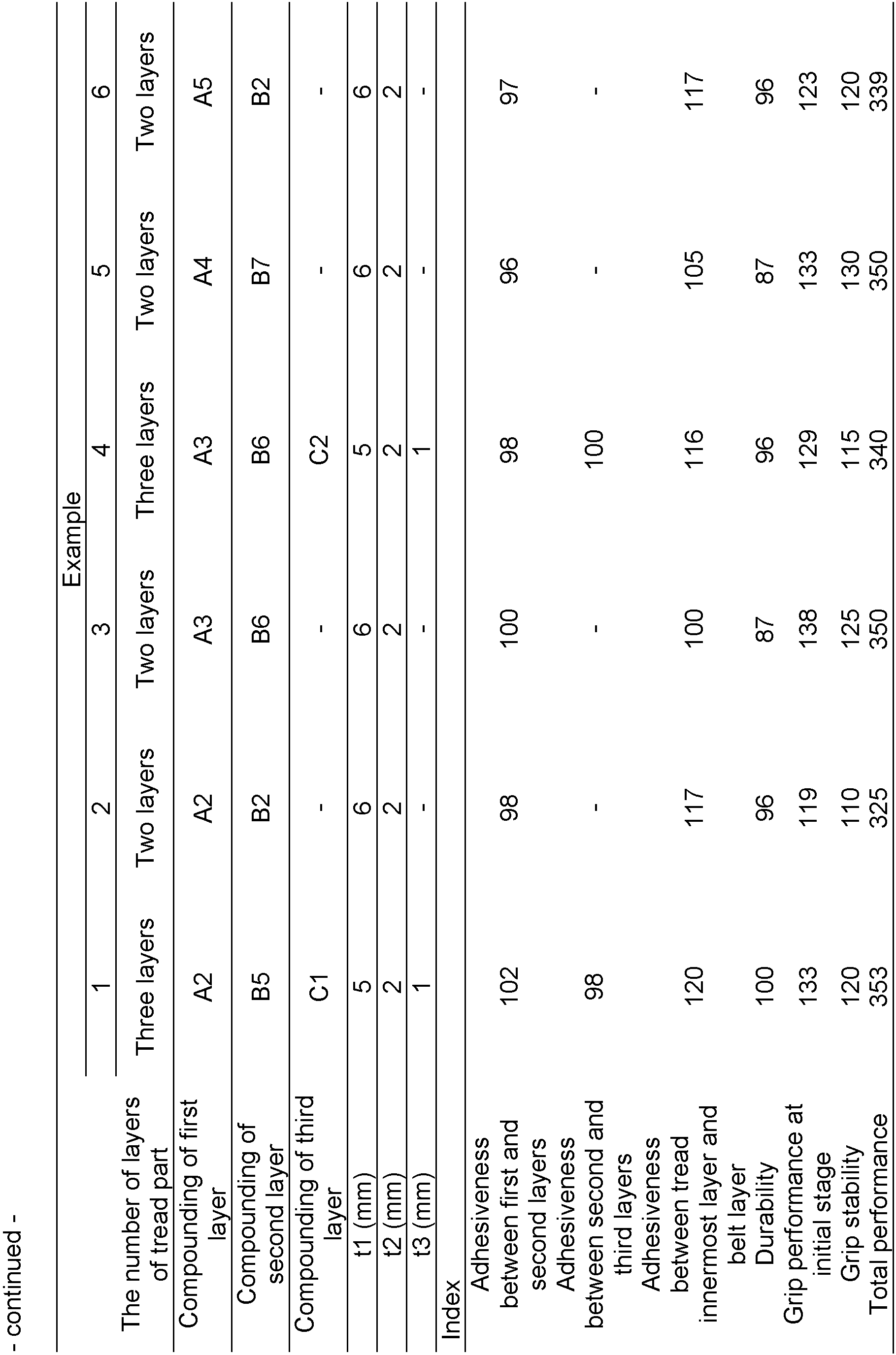

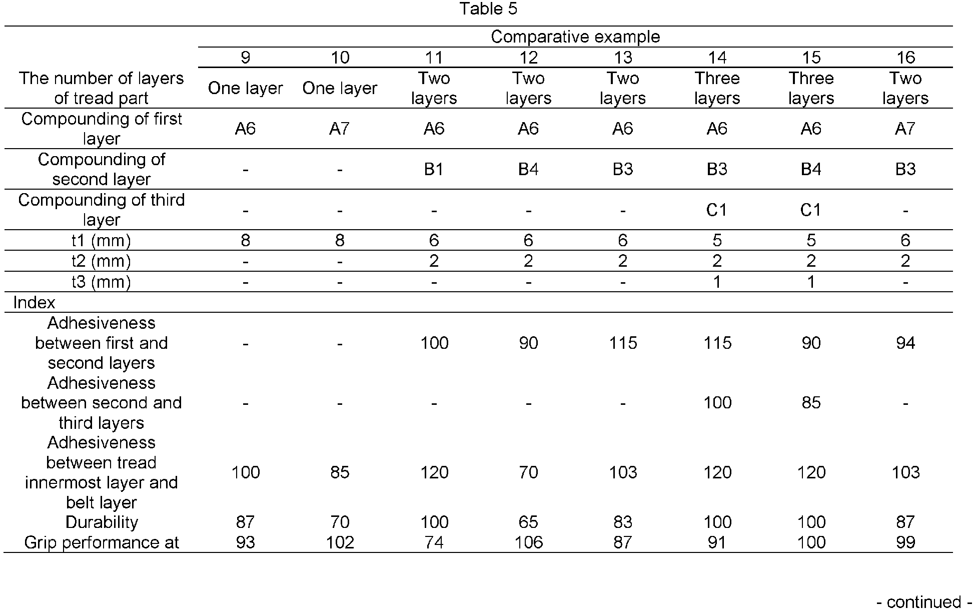

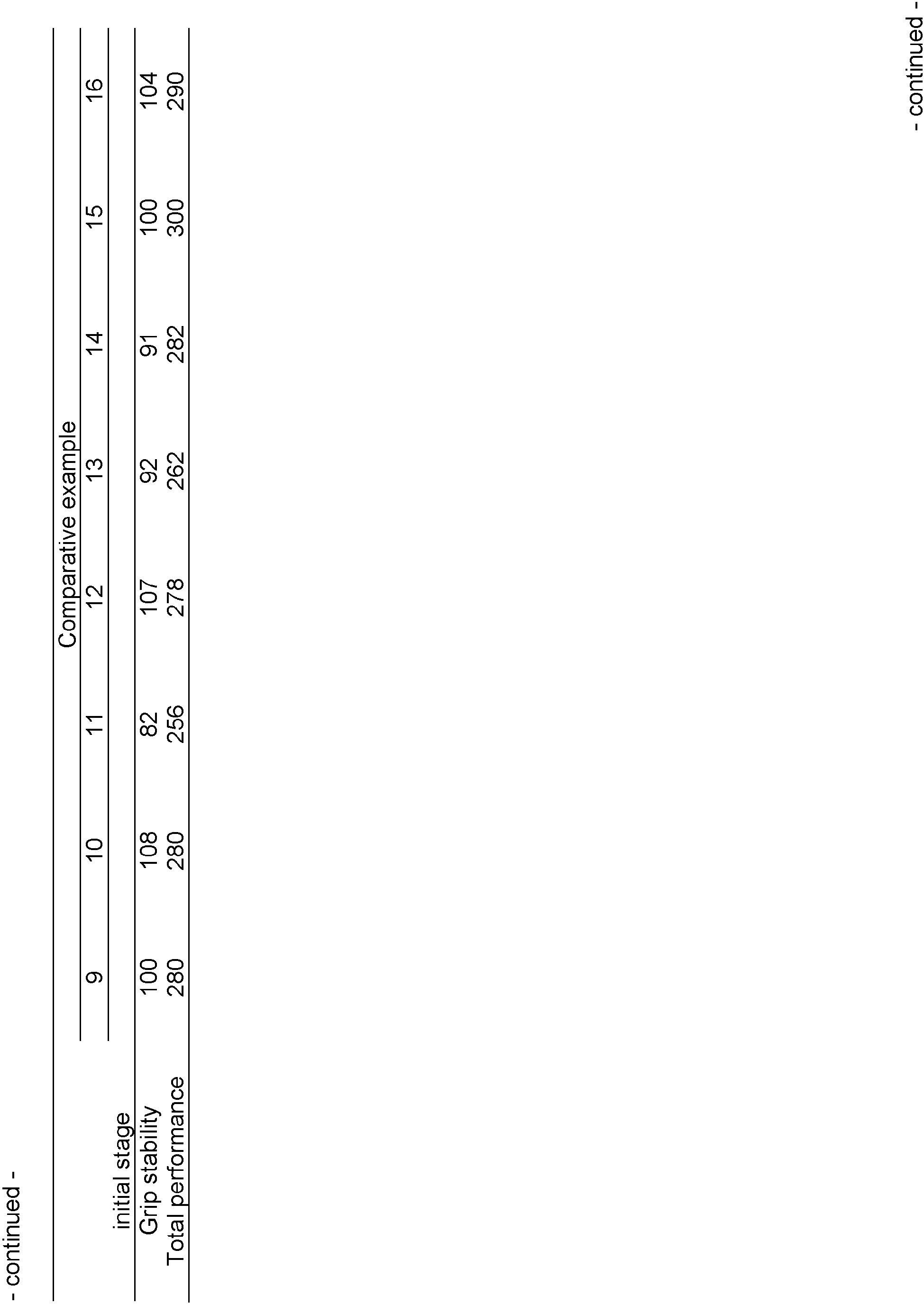

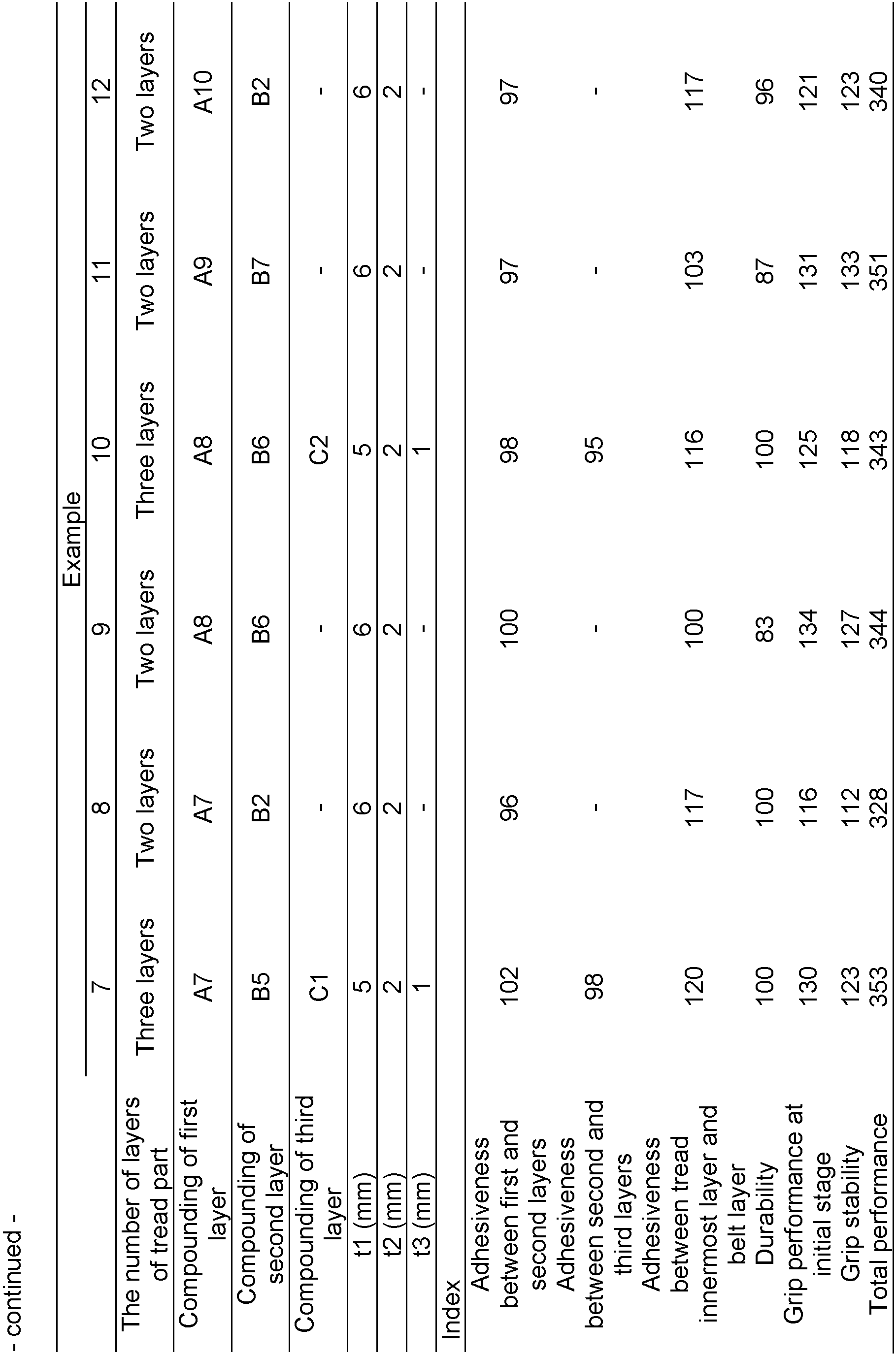

From the results shown in Tables 1 to 5, it can be found that the tire according to the present disclosure, in which the first layer and the second layer of the tread are constituted by a rubber composition comprising a rubber component and a thermoplastic elastomer, has improved grip performance and durability with good balance.

### REFERENCE SIGNS LIST

- 1: Tread surface
- 2: First layer
- 3: Second layer
- 4: Third layer

## Claims

1. A tire comprising a tread,
the tread comprising
a first layer constituting a tread surface, and
a second layer adjacent to an inner side of the first layer in a radial direction,
wherein each of the first layer and the second layer is constituted by a rubber composition comprising a rubber component and a thermoplastic elastomer.

2. The tire of claim 1, wherein the rubber composition of the first layer comprises 5 to 50 parts by mass of a thermoplastic elastomer based on 100 parts by mass of a rubber component of the first layer.

3. The tire of claim 1 or 2, wherein the rubber composition of the second layer comprises 3 to 30 parts by mass of a thermoplastic elastomer based on 100 parts by mass of a rubber component of the second layer.

4. The tire of any one of claims 1 to 3, wherein a value of a part by mass of the thermoplastic elastomer based on 100 parts by mass of the rubber component of the first layer is greater than a value of a part by mass of the thermoplastic elastomer based on 100 parts by mass of the rubber component of the second layer.

5. The tire of any one of claims 1 to 4, wherein each of the rubber components of the first layer and the second layer comprise a styrene-butadiene rubber.

6. The tire of any one of claims 1 to 5, wherein the thermoplastic elastomer has a styrene block at a polymer terminal.

7. The tire of any one of claims 1 to 6, further comprising one or more rubber layers arranged between the second layer and a belt layer.

8. The tire of any one of claims 1 to 7, further comprising a third layer that is arranged between the second layer and a belt layer, the third layer being constituted by a rubber composition comprising a rubber component and sulfur,
wherein a value of a part by mass of sulfur based on 100 parts by mass of the rubber component of the third layer is greater than a value of a part by mass of sulfur based on 100 parts by mass of the rubber component of the second layer.

9. The tire of any one of claims 1 to 8, wherein at least one of the rubber composition of the first layer and the rubber composition of the second layer comprises a thiuram-based vulcanization accelerator.

10. The tire of any one of claims 1 to 9, wherein a product of a content of the thermoplastic elastomer based on 100 parts by mass of the rubber component of the first layer (parts by mass) and a thickness of the first layer t1 (mm) is 120 or more.

11. The tire of any one of claims 1 to 10, wherein a product of a content of the thermoplastic elastomer based on 100 parts by mass of the rubber component of the second layer (parts by mass) and a thickness of the second layer t2 (mm) is 6 or more.
